# EUROPÄISCHE PATENTSCHRIFT

(11) **EP 2 213 926 B1**
(45) Veröffentlichungstag und Bekanntmachung des Hinweises auf die Patenterteilung: **13.04.2011**
(21) Anmeldenummer: 09075029.0
(22) Anmeldetag: 17.01.2009
(51) Int. Cl.: F16L 29/04, F16L 55/10, F16L 37/34

(54) **Schnelltrennkupplung zum dichtenden Verbinden von flüssige oder gasförmige Medien transportierenden Leitungen**
Quick release coupling for sealed connection of supply channels transporting fluid or gaseous media
Raccord de coupure rapide destiné à la connection étanche de conduites transportant des fluides liquides ou gazeux

(43) Veröffentlichungstag der Anmeldung: 04.08.2010
(73) Patentinhaber: Roman Seliger GmbH, 22848 Norderstedt (DE)
(72) Erfinder: Buhk, Birger, 21039 Hamburg (DE); Hamkens, Hauke-Peter, 25832 Tönning (DE); Brandt, Holger, 22869 Schenefeld (DE); Schwarz, Eugen, 21033 Hamburg (DE); Adam, Michael, 24589 Nortorf (DE)
(74) Vertreter: Wenzel & Kalkoff

(56) Entgegenhaltungen:
- WO-A-96/21120
- DE-A1- 2 352 558
- DE-U1- 9 409 452
- DE-U1-202005 021 120
- US-A- 2 772 898

## Beschreibung

Die Erfindung betrifft eine Schnelltrennkupplung zum dichtenden Verbinden von flüssige oder gasförmige Medien transportierenden Leitungen.

Die Schnelltrennkupplung umfasst (a)) zwei in der Leitungsverbindung unter Mediumdruck trennbare, einen Medium-Strömungsweg in der Kupplung herstellende, sich jeweils zwischen Kupplungsseite und Leitungsseite in gerader Kupplungsmittenachse erstreckende Kupplungsteile mit Mutterteil und Vaterteil, die kupplungsseitig eine einen gedichteten Mediumdurchgang im Medium-Strömungsweg herstellende Anschluss-Steckverbindung ausbilden, wobei das ein Steckende aufweisende Vaterteil einen steckseitig in Axialrichtung zur Kupplungsseite geschlossenen, seitlich durch innere (zur Kupplungsmittenachse näher gelegene) Anschluss-Durchströmungsöffnungen offenen, Medium führenden axialen Anschlusskanal und das Mutterteil zur Steckaufnahme des Vaterteils eine kupplungsseitige, vordere gedichtete Steckfassung und eine axial versetzte hintere gedichtete Steckfassung aufweisen, wobei zwischen den Steckeinfassungen wenigstens eine äußere (zur Kupplungsmittenachse weiter weg gelegene) Anschluss-Durchströmungsöffnung ausgebildet ist; (b)) eine die beiden Kupplungsteile in lösbarer Steckverbindung haltende Verrieglungseinrichtung; (c)) ein eine Sicherung bildendes Schnelltrennmittel.

Das Schnelltrennmittel umfasst (c1)) eine im Zustand der Anschluss-Steckverbindung zwischen dem Mutterteil und dem Vaterteil ausgebildete, den Mediumdurchgang herstellende druckneutrale Trennübergangsstelle, die derart ausgebildet ist, dass bei Mediumdurchfluss an der Trennübergangsstelle axial wirkende Aktions- und Reaktionskräfte druckneutralisierend ausgeglichen sind; (c2)) eine Nottrenneinrichtung, umfassend die Verriegelungseinrichtung und eine damit zusammenwirkende, in einstellbarem Maß mittels Weg- oder Zugsteuerung betreibbare Auslöseeinrichtung zum definierten Trennen der beiden Kupplungsteile an einer Trennverriegelungsstelle, die infolge der Wirkung der druckneutralen Trenn-Mediumübergangsstelle von aus Mediumdurchfluss resultierenden Axialkräften frei ist.

Eine Schnelltrennkupplung der genannten Art für Hochdruck ist aus US 2,772,898 bekannt. Eine Trennverriegelungsstelle wird von aus Mediumdurchfluss resultierenden Axialkräften freigehalten. Bereits geringste Änderung im Dichtungsbereich an der Trenn-Mediumübergangsstelle bewirkt kräftemäßiges Ungleichgewicht mit der Folge strömungsbedingter Druckkraft zwischen den verbundenen Kupplungsteilen. Dadurch soll gemäß US 2,772,898 gezielte, von Mediumdurchfluss abhängige Trennkraft zwischen den Kupplungsteilen bewirkt werden.

Schnelltrennkupplungen mit selbsttätig wirkenden Ventilen, die über Ventilschäfte oder dergleichen axial gegeneinander arbeiten, sind zahlreich bekannt. Durch die Anordnung der Ventile entsteht ein von Mediumdurchfluss insbesondere unter Hochdruck abhängiger Trenndruck, der die Trenn-/Abreißkrafl zum Trennen der beiden Kupplungsteile unerwünscht beeinflusst. Abreißkraft ist nicht zufriedenstellend einstellbar. Hinsichtlich verbesserter Einstellung ist eine besondere Druckausgleichskammer vorgeschlagen worden (DE 20 2005 021 120 U1). Dadurch werden Bauform und Funktion der Kupplung durch einen als zweiten Mediumraum vorgesehenen Gegenkraftraum beeinträchtigt. Insbesondere kommt eine Anwendung für pastöse Medien, Öle oder dergleichen nicht in Betracht. Solche Medien setzen die über mehrere Verbindungsanleitungen hergestellte Verbindung zwischen dem Ausgleichsraum und dem Medium-Strömungsweg durch Verklebung oder Verunreinigung leicht zu. Ein Durchspülen zum Reinigen ist nicht möglich. Aus WO96/21120 ist es bekannt, Ventilfedern außerhalb von Strömungspfaden anzuordnen. Der Einfluss von Mediumdruck auf die mittels Schnelltrennmittel zu öffnende Trennstelle bleibt bestehen.

Schnelltrennstellen, die durch die genannten Schnelltrennkupplungen mit selbsttätigen Ventilen bereitgestellt werden, bewirken beim Überschreiten einer festgelegten Trennkraft (Abreißkraft) eine Trennung der Kupplungsteile und schließen die Medium-Trennstelle beidseitig selbsttätig ab. Die Kupplungen müssen nach besonderen, in technischen Regeln festgelegten Vorschriften besonders funktions- und betriebssicher arbeiten. Zwar sind die bekannten Schnelltrennkupplungen mit selbsttätigen Ventilen in einem gewissen Maß in der Lage, den Einfluss von innerem axialem Druck infolge von durchströmendem Medium zu reduzieren. Insbesondere entstehen aber kritische Verhältnisse, wenn die Kupplung unter hohem Mediumdruck steht und zu trennen ist. Als hoher Druck ist bereits ein Innendruck in der Größenordnung von 10 bar und auch weniger anzusehen. Zum Beispiel tritt ein Druck in dieser Größenordnung in Betankungsschläuchen auf, die an fliegendes Fluggerät angekuppelt werden. Bei dem genannten Druck muss zum Beispiel eine Abreißkraft von 200 kg mit einer Toleranz von ± 3 kg sichergestellt sein. Selbst wenn bei den bekannten Kupplungen der Einfluss des Medium-Betriebsdrucks auf Teile der Ventile reduziert ist, so bleibt er doch beachtlich. Selbst eine kleine axiale Druckbelastung an axial beweglichen Ventilteilen führt an einer an sich druckneutral gehaltenen Trennübergangsstelle für Medium zu einem Ungleichgewicht mit der Folge, dass ein angestrebter vorgegebener engerer Toleranzbereich der Abreißkraft zur Nottrennung nicht erzielt werden kann.

Danach liegen der Erfindung die Ziele zugrunde, eine Schnelltrennkupplung mit selbsttätigen Verschlussventilen und einem Schnelltrennmittel zu schaffen, deren Abreißkraft vom Einfluss des inneren Medium-Betriebsdruckes in der Kupplung vollständig befreit ist. Auch soll ein günstiger, ausreichend großer und von Mehrfachumlenkung befreiter Durchströmungsquerschnitt erreicht sein, der eine selbstreinigende CIP-Funktion gewährleistet (Clean in Process). Weiterhin soll die Schnelltrennkupplung einfach zu bauen, kostengünstig herstellbar und besonders betriebszuverlässig sein.

Die genannten Ziele werden in Verbindung mit den Merkmalen der Schnelltrennkupplung der eingangs genannten Art dadurch erreicht, dass (i)) das eine Kupplungsteil ein Mutterteil-Ventilmittel und das andere Kupplungsteil ein Vaterteil-Ventilmittel umfassen, die derart eingerichtet sind, dass sie einerseits die wenigstens eine äußere Anschluss-Durchströmungsöffnung und andererseits die inneren Anschluss-Durchströmungsöffnungen im Kupplungs-Verbindungszustand öffnen bzw. im Kupplungs-Trennzustand schließen, (ii)) die Ventilmittel weiter derart eingerichtet sind, dass jedes Ventilmittel einen Schließkörper und ein ihn in Axialrichtung zur Kupplungsseite hin treibendes Antriebsmittel derart aufweist, dass jeder Schließkörper im Kupplungs-Verbindungszustand mittels der verriegelten Anschluss-Steckverbindung in gegen das zugehörige Antriebsmittel verdrängter Ventil-Öffnungsposition gehalten und beim Trennen der Kupplungsteile mittels der Nottrenneinrichtung in die Ventil-Schließposition getrieben wird, (iii)) die getriebenen Ventil-Schließkörper Bestandteile der Nottrenneinrichtung derart bilden, dass die Kupplungsteile beim Trennen in Axialrichtung selbsttätig auseinander treiben, und (iv)) sämtliche die Durchströmungsöffnungen öffnenden und schließenden Schließkörper sowie deren Antriebsmittel im Verbindungszustand der Kupplung gänzlich außerhalb des Medium-Strömungswegs in Abdichtung gegenüber diesem vollständig frei von Durchflussmedium angeordnet sind.

Die Erfindung macht sich die an sich bekannte Druckneutralisierung einer ventilfreien Trenn-Mediumübergangsstelle zu Nutze. Erfindungsgemäß wird dann an der Trenn-Mediumübergangsstelle auch nur geringster axialer Medium-Betriebsdruck von den Kupplungsventilen ferngehalten. Dies gelingt dadurch, dass sämtliche zum Öffnen und Schließen bewegliche Ventilteile, nämlich Schließkörper sowie deren Antriebsmittel im Verbindungszustand der Kupplung derart dichtend eingekapselt werden, dass sie vollständig außerhalb des Medium-Strömungswegs in Abdichtung gegenüber diesem frei von Durchflussmedium sind. Es ist gefunden worden, dass dadurch der Einfluss von Betriebsdruck des durchströmenden Mediums an der Trenn-Mediumübergangsstelle auf dynamische Teile der Ventilelemente, gegen deren Antriebskräfte die Kupplungsteile verriegelt verbunden sind, vollständig beseitigt wird. Man erreicht, dass die im Übrigen an der Trenn-Mediumübergangsstelle hergestellte Druckneutralität erhalten bleibt. Bei den bekannten Maßnahmen zum Reduzieren von Druckeinflüssen bestehenbleibende Anfälligkeit sowie an Medium-Betriebsdrücke anzupassende Toleranzbereiche zum Einrichten der Abreißkraft einer durch die Nottrenneinrichtung gebildeten Abreißsicherung entfallen.

Die erfindungsgemäß erzielte Druckneutralität an der Trenn-Mediumübergangsstelle, die durch dynamisch unter Axialkraft gehaltene, axial bewegliche Teile der Ventile nicht gestört wird, führt dazu, dass die Abreißkraft, also die selbsttätige Entriegelung der Kupplungsverbindung bewirkende Auslösekraft an der Trennverriegelungsstelle der Auslöseeinrichtung ausschließlich durch letztere bestimmt und vorgegeben wird. Eine Anpassung an zum Beispiel bereichsweise unterschiedliche Durchströmungsbetriebsdrücke mit dadurch veränderlichen Toleranzbereichen entfällt. Einfluss auf die Abreißkraft der Auslöseeinrichtung ist bei jedem Medium-Betriebsdruck, und zwar auch bei mehreren Hundert Bar beseitigt. Dadurch lässt sich die Auslösekraft besonders einfach allein nach Maßgabe von Charakteristika und Konstruktion der Auslöseeinrichtung bestimmen und gegebenenfalls einstellen. Die Auslösekraft kann besonders fokussiert werden. Das heißt, dass ihr Toleranzbereich besonders klein bleibt. Zum Beispiel können Bruchbolzen einheitlicher Mindeststärke für ganz unterschiedliche Bereiche von Medium-Betriebsdruck in den Leitungen eingesetzt werden. Durch einfache Strömungsumlenkung an der Trenn-Mediumübergangsstelle, vorzugsweise unter Nutzung eines umlaufenden radialen Übergangsringkanals, bleibt der Strömungsquerschnitt des Strömungswegs in der Kupplung relativ groß und ohne Einfluss von nachteiligen Strömungsschatten, Verengungen oder Mehrfach-Kanalisierung. Die erfindungsgemäße Kupplung baut besonders einfach. Sie lässt sich nach dem Trennen wieder einfach zum Kuppeln zusammenstecken und mit einfachem Mittel der Nottrenneinrichtung verriegeln und sichern. Im Ganzen sind mit der erfindungsgemäßen Schnelltrennkupplung erhebliche Vorteile zur insbesondere unter hohem Druck stehenden Mediumdurchleitung in der Kupplung sowie zum statischen, von dynamischen Einflüssen befreiten Einrichten gewünschter Abreißkraft (Auslösekraft) mit engem, von Betriebseinflüssen befreitem Toleranzbereich erreicht.

Gemäß besonders einfach Gestaltung ist jedes Kupplungsteil mit nur einem Ventilmittel-Schließkörper ausgestattet, wobei radiale Stirnflächen der als Verschlusshülsen ausgebildeten Schließkörper in jeder Position frei von axial wirkendem Mediumdruck gehalten sind, wobei die beiden Schließkörper konzentrisch mit der Kupplungsmittenachse angeordnet und jeweils mit nur einem Antriebsmittel beaufschlagt sind, das zweckmäßig durch eine mit der Kupplungsmittenachse konzentrische Druckfeder gebildet ist.

Eine bevorzugte einfache Gestaltung besteht weiterhin darin, dass das Mutterteil-Kupplungsteil ein Innengehäuse mit einem kupplungsseitig offenen Hohlzylinder aufweist, der einen einkapselnden Ventilaufnahmeraum für das Mutterteil-Ventilmittel bildet, das in der im Kupplungsverbindungszustand eingerichteten Ventil-Öffnungsposition vollständig in dem Mutterteil-Ventilaufnahmeraum frei von Mediumberührung dadurch eingekapselt ist, dass das Steckende des Vaterteils in die hintere Mutterteil-Steckfassung im Dichtungsstecksitz einfasst.

Eine erfindungsgemäße Ausgestaltung des Vaterteil-Kupplungsteils weist ein das Vaterteil bildendes Innengehäuse und ein Außengehäuse auf, zwischen denen ein einkapselnder ringförmiger Ventilaufnahmeraum für das Vaterteil-Ventilmittel ausgebildet ist, das in der im Kupplungsverbindungszustand eingerichteten Ventil-Öffnungsposition vollständig in dem Vaterteil-Ventilaufnahmeraum frei von Mediumberührung dadurch eingekapselt ist, dass das Mutterteil-Kupplungsteil mit einem kupplungsseitigen Gehäusesteckrand ausgebildet ist, das den Vaterteil-Ventilaufnahmeraum kupplungsseitig im Dichtsitz schließt.

Nach einer Ausführungsform der Erfindung sind die Schließkörper der beiden Ventilmittel derart eingerichtet und angeordnet, dass sie unter der Wirkung der Ventilantriebsmittel in Axialrichtung jeweils gegen einen kupplungsseitigen gehäusefesten Rand des einen bzw. des anderen Kupplungsteils arbeiten und im Kupplungsverbindungszustand jeweils mittels des gehäusefesten Randes in einem zugehörigen, gegenüber Medium im Strömungsweg dicht geschlossenen Ventilaufnahmeraum gehalten sind.

Nach einer weiteren Ausgestaltung sieht die Erfindung vor, dass zwischen den Kupplungsteilen eine stufenartige Steckverbindung derart ausgebildet ist, dass kupplungsseitig innere gehäusefeste Steckränder und äußere gehäusefeste Steckränder sowie an den beiden Schließkörper ausgebildete kupplungsseitige Stufen-Steckränder mit zugeordneten gehäusefesten Steckrändern des jeweils anderen Kupplungsteils beim Zusammenstecken der Kupplungsteile und im Verbindungszustand der Kupplung mit der Kupplungsmittenachse konzentrische Steckverbindungen bilden. Mit diesen Maßnahmen ist der Bereich der druckneutralen Verbindung besonders gesichert und gegen Quer- oder Momentenkräfte geschützt.

Eine bevorzuge Gestaltung besteht darin, dass die Trennübergangsstelle durch einen druckneutralen Raum bestimmt ist, der in radialer Ausrichtung einen die distale Anschluss-Durchströmungsöffnung über seinen Ringumfang aufweisenden Übergangs-Ringkanal aufweist, der zwischen gleichen, das Mutterteil und das Vaterteil im Bereich der Mutterteil-Steckfassungen gegeneinander abdichtenden radialen Umfangsdichtungen ausgebildet ist, sowie bestimmt durch die inneren Anschluss-Durchströmungsöffnungen, die radial mit dem radialen Übergangs-Ringkanal ausgerichtet sind und in ihn an der wenigstens einen Anschluss-Durchströmungsöffnung münden, wobei der Übergangs-Ringkanal mit der wenigstens einen äußeren Anschluss-Durchströmungsöffnung und den inneren Anschluss-Durchströmungsöffnungen derart ausgebildet und eingerichtet ist, dass bei Mediumdurchfluss an der Trennübergangsstelle axial wirkende Aktions- und Reaktionskräfte druckneutralisierend ausgeglichen werden;

Einen Strömungsweg mit besonders großen Strömungsquerschnitten und besonderer Reduzierung umströmter Bereiche erreicht man nach einer erfindungsgemäßen Ausgestaltung dadurch, dass das Mutterteil ein Außengehäuse und ein Innengehäuse aufweist, die konzentrisch angeordnet sind und als Bestandteil des Medium-Strömungswegs einen sich axial erstreckenden umlaufenden Ringkanal ausbilden, der kupplungsseitig in den radialen Übergangs-Ringkanal mündet, und dass das Mutterteil leitungsseitig ein Leitungsanschlussstück und als Bestandteil des Medium-Strömungswegs einen an dem Leitungsanschlussstück endenden zentralen Mediumkanal aufweist, der zum Durchgang von Medium im Medium-Strömungsweg mit wenigstens einer Radialöffnung ausgebildet ist, in die der axiale Medium-Ringkanal leitungsseitig mündet. Besonders vorteilhaft ist es, dass der zentrale Mediumkanal des Mutterteil-Kupplungsteils zwischen dem axialen Mutterteil-Ringkanal und einer Verbindungsöffnung des Leitungsanschlussstückes geradlinig, in Radialrichtung frei von gegensinniger Strömungsführung ausgebildet werden kann. Der zentrale Mutterteil-Mediumkanal ist dann zweckmäßig durch einen sich axial erstreckenden Hohlzylinder mit kupplungsseitig geschlossener Zylinderbodenwand und mit in seitlicher Hohlzylinderwand den Radialöffnungen gebildet, in die der axiale Medium-Ringkanal mündet und die am kupplungsseitigen Ende des Hohlzylinders in radialer, zur Kupplungsmittenachse senkrechter Ausrichtung in gleichmäßiger Anordnung ausgebildet sind.

Hinsichtlich der Ausbildung eines besonders vorteilhaften Strömungswegs weist das Vaterteil-Kupplungsteil ein das Vaterteil bildendes Innengehäuse in Form eines sich axial erstreckenden Hohlzylinders auf, wobei der axiale Vaterteil-Anschlusskanal mit kupplungsseitig geschlossener Vaterteil-Zylinderbodenwand und mit in seitlicher Hohlzylinderwand den inneren Anschluss-Durchströmungsöffnungen ausgebildet ist, und wobei die Anschluss-Durchströmungsöffnungen am kupplungsseitigen Ende des Hohlzylinders in radialer, zur Kupplungsmittenachse senkrechter Ausrichtung in gleichmäßiger Anordnung ausgebildet sind. Vorteilhaft ist dann der Vaterteil-Anschlusskanal zwischen einer Verbindungsöffnung des Leitungsanschlussstücks und der Vaterteilzylinderbodenwand geradlinig, in Radialrichtung frei von gegensinniger Strömungsführung ausgebildet. Diese Maßnahme sowie auch die zuvor angegebenen ausgestaltenden Merkmale des Mutterteils erreicht man im Zusammenhang mit der erfindungsgemäßen, den Strömungsweg von Ventilteilen befreienden Gestaltung.

Die Nottrenneinrichtung der Schnelltrennkupplung kann zum Beispiel durch eine die Verriegelungseinrichtung und die Auslöseeinrichtung bildende Bruchbolzensicherung gebildet sein. Die Abreißkraft der Bruchbolzen wird ausschließlich durch die Bruchbolzen und deren Vorspannung bestimmt. Das heißt, dass der Abriss durch axiale Zugkraft auf die Bruchbolzen bewirkt wird, die ausschließlich durch Zugkraft bestimmt und eingerichtet ist, die zwischen gekuppelten Leitungen frei von Einfluss des durchströmenden Mediums in vorgegebener Größe auftritt, um eine Beschädigung von mit den Leitungen verbundener Gerätschaft, insbesondere eines im Flug betankten Fluggeräts bei Überbelastung zuverlässig und sicher zu verhindern.

Unteransprüche sind auf die genannten und noch andere zweckmäßige und vorteilhafte Ausgestaltungen der Erfindung gerichtet. Besonders zweckmäßige und vorteilhafte Ausführungsformen oder -möglichkeiten der Erfindung werden anhand der folgenden Beschreibung der in der schematischen Zeichnung dargestellten Ausführungsbeispiele beschrieben. Es zeigen
- Fig. 1: in mittigem Längsquerschnitt ein Ausführungsbeispiel einer erfin- dungsgemäßen Schnelltrennkupplung im Zustand zum Herstellen der Kupplungsverbindung mit den Durchfluss noch sperrenden Ventilmitteln,
- Fig. 2: die Schnelltrennkupplung nach Fig. 1 im gekuppelten Verbin- dungszustand mit einer Bruchbolzen umfassenden Nottrennein- richtung und
- Fig. 3: die Schnelltrennkupplung nach Fig. 1 und 2 in leitungsseitiger Stirnansicht des Mutterteils dieser Kupplung.

Eine erfindungsgemäße Schnelltrennkupplung 1 umfasst ein ein Mutterteil 21 bildendes Kupplungsteil 2 und ein ein Vaterteil 31 aufweisendes Kupplungsteil 3. Wie aus der Zeichnung ersichtlich, erstrecken sich die Kupplungsteile 2, 3 in gerader Kupplungsmittenachse 10. Die vorstehend und im Folgenden verwendete Angabe "axial" bezeichnet die Richtungen der Achse 10 bzw. damit achsparallele Ausrichtungen oder Anordnungen.

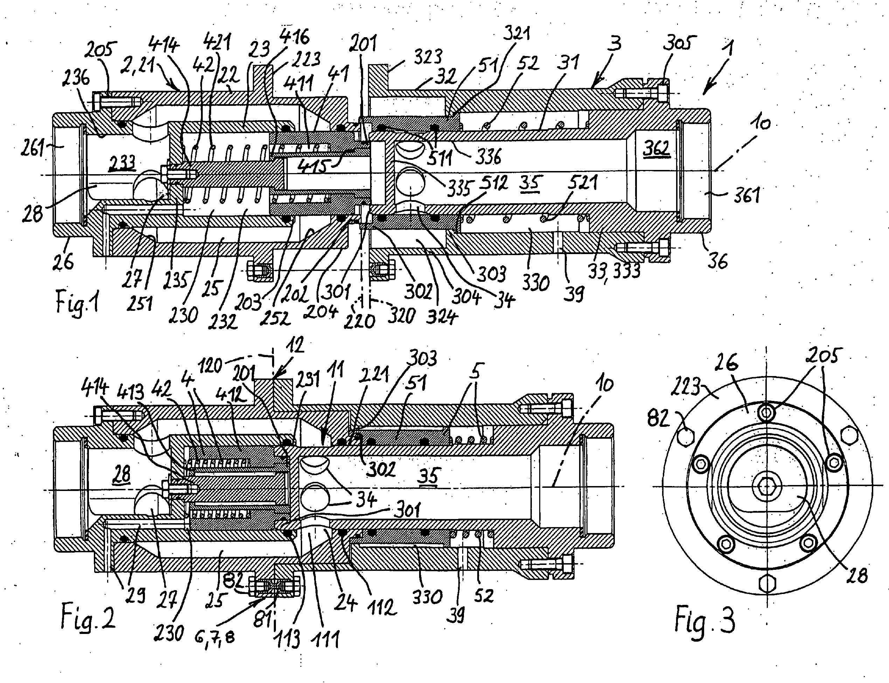

Fig. 1 zeigt die beiden Kupplungsteile 2, 3 in axialer Ausrichtung unmittelbar vor dem Kuppeln. Die Kupplung 1 ist mit selbsttätigen Ventilmitteln 4, 5 ausgestattet, die derart eingerichtet und ausgebildet sind, dass jedes Kupplungsteil 2, 3 im nicht-verbundenen Zustand der Kupplung 1 kupplungsseitig dichtend geschlossen ist (Fig. 1), während die Kupplungsteile 2, 3 im aneinandergekuppelten Zustand, das heißt im Verbindungszustand der Kupplung 1 kupplungsseitig zum Durchtritt von Medium geöffnet sind (Fig. 2). Die Ventilmittel 4, 5 sind die einzigen, ausschließlichen Ventilmittel der Kupplung 1.

Eine Stirnseite des Kupplungsteils 2 bildet eine Leitungsseite, die durch ein Leitungsanschlussstück 26 mit Leitungsverbindungsöfnung 261 bestimmt ist. Die andere Stirnseite des Kupplungsteils 2 bildet die Kupplungsseite zur Verbindung mit dem anderen Kupplungsteil 3.

Das Mutterteil 21 ist aus einem Innengehäuse 23, das einen zur Kupplungsseite hin (kupplungsseitig) offenen Hohlzylinder 232 aufweist, und einem Außengehäuse 22 zusammengefügt. Die Gehäuse 22, 23 sind kreiszylindrische Hülsen, die mit der Kupplungsmittenachse 10 konzentrisch angeordnet sind. Das Innengehäuse 23 weist zur Leitungsseite hin (leitungsseitig) einen Anschlussflansch in fester Schraubverbindung 205 mit einem Hülsenrand des Außengehäuses 22 auf.

Das Innengehäuse 23 und das Außengehäuse 22 des Mutterteils 21 bilden besondere, den Mediumströmungsweg in dem Kupplungsteil 2 gestaltende Räume aus. Zwischen axial gerichteter Innenwand des Außengehäuses 22 und gleichfalls gerader, axial gerichteter Außenwand des Innengehäuses 23 ist ein axialer umlaufender Medium-Ringkanal 25 ausgebildet. Dieser erstreckt sich leitungsseitig mit einer zur Kupplungsmittenachse 10 weisenden Endfläche 251 bis in den Bereich über radiale Durchströmungsöffnungen 27 in der axialen (längsseitigen) Umfangswand 236 des Innengehäuses 23. Der axiale Ringkanal 25 erstreckt sich kupplungsseitig mit zur Kupplungsmittenachse 10 weisender Endfläche 252 über einen radial gerichteten Übergangs-Ringkanal 111. Dieser bildet an einer durch einen Bereich bestimmten Stelle 11 einen Übergang für Medium im Verbindungszustand der Kupplung 1. Der axiale Ringkanal 25, der umlaufend ausgebildet ist, ist zur Innenseite des Kupplungsteils 2, das heißt zur Kupplungsmittenachse 10 hin, durch eine einzige äußere Anschluss-Durchströmungsöffnung 24, die entsprechend ringförmig umläuft, offen. Die äußere Durchströmungsöffnung 24 ist radial von der Kupplungsmittenachse 10 weiter weg gelegen als zugehörige Anschluss-Durchströmungsöffnungen 34 des Vaterteils 31.

Die Leitungsverbindungsöffnung 261 geht in einen zentralen Mediumkanal 28 über, der durch einen sich axial erstreckenden topfartigen Hohlzylinder 233 des Innengehäuses 23 gebildet ist. Der Hohlzylinder 233 endet kupplungsseitig an einer die beiden Hohlzylinder 232, 233 trennenden radialen Zwischenwand 235 mit geschlossener planflächiger Bodenwand, die zur Kupplungsmittenachse 10 senkrecht gerichtet ist. Die radialen Durchströmungsöffnungen 27 in der Wand 236 sind in ausreichender Zahl und Anpassung an die Strömungskapazität des Kanals 28 gleichmäßig über den Umfang des Innengehäuses 23 verteilt und weisen zweckmäßig jeweils gleichen, kreisformähnlichen Durchgangsquerschnitt auf. Sie münden unmittelbar in den zentralen Mediumkanal 28, wobei sie unmittelbar an die Zwischenwand 235 angrenzen. Auch ist der Strömungsquerschnitt des Ringkanals 25 entsprechend dem Strömungsvermögen des Kanals 28 ausgelegt.

Der radiale Übergangs-Ringkanal 111 ist mit der äußeren Anschluss-Durchströmungsöffnung 24 zwischen einer vorderen Steckfassung 221 und einer axial versetzten hinteren Steckfassung 231 des Mutterteils 21 ausgebildet. Die vordere Steckfassung 221 ist durch eine kupplungsseitige, Kreisquerschnitt aufweisende Stirnöffnung des Außengehäuses 22 ausgebildet. Die hintere Steckfassung 231 ist durch eine der vorderen Steckfassung 221 gegenüberliegende, Kreisquerschnitt aufweisende Stirnöffnung des Innengehäuses 23 gebildet. Die Steckfassungen 221, 231 fluchten axial miteinander und bilden zusammen eine Mutterteilbuchse. Zwischen den Steckfassungen 221, 231 ist die umlaufende äußere Anschluss-Durchströmungsöffnung 24 ausgebildet. Die Ausbildung der Mutterteilbuchse ist auf die Ausbildung mit Innengehäuse und Außengehäuse nicht beschränkt. Sie kann z. B. auch allein durch ein die Steckfassungen aufweisendes Innengehäuse gebildet sein.

Der Hohlzylinder 232 bildet zwischen der Zwischenwand 235 und seiner kupplungsseitigen Stirnöffnung einen Ventilaufnahmeraum 230 für das Mutterteil-Ventilmittel 4 aus. Dieses ist durch einen Schließkörper 41 und ein diesen beaufschlagendes Antriebsmittel 42 gebildet. Der Schließkörper 41 ist als Zylinderkörper mit einem Kreisquerschnitt ausgebildet, der dem Kreisquerschnitt des Ventilaufnahmeraums 230 entspricht. Der Schließkörper 41 sitzt im axial beweglichen Gleit-Schiebesitz in dem Ventilaufnahmeraum 230. Das Antriebsmittel 42 wird durch eine Druck-Schraubenfeder 421 gebildet, die axial in einen zur Zwischenwand 235 offenen kreisförmigen Ringraum 411 innerhalb des Schließkörpers 41 einfasst. An ihrem einen Ende stützt sich die Schraubenfeder 421 gegen die Zwischenwand 235 ab, während sie an ihrem anderen kupplungsseitigen Ende gegen eine Schulter des Ringraums 411 abgestützt ist.

Der Schließkörper 41 ist durch eine axiale Außenhülse 412 und eine damit konzentrische Innenhülse 413 gebildet. Die Hülsen 412, 413 bilden zwischen sich den Ringraum 411 aus. Die Innenhülse 413 ist über einen axialen Zylinderkern 414 gesetzt und daran geführt. Der Zylinderkern 414 ist mittels fester Schraubverbindung an der Zwischenwand 235 befestigt.

Der Schließkörper 41 ist so dimensioniert, dass er in der in Fig. 2 dargestellten Kupplungsverbindung so weit und derart in das Innengehäuse 23 bzw. den Ventilaufnahmeraum 230 eintaucht und eingekapselt ist, dass die Steckfassung 231 zur dichtenden Aufnahme eines durch einen inneren Steckrand 301 gebildeten Steckendes des Vaterteils 31 frei ist. Zudem ist der Schließkörper 41 so dimensioniert, dass er bei nicht verbundener Kupplung 1, wie es aus Fig. 1 hervorgeht, mit seinem Außenumfang in die Steckfassungen 221, 231 einfasst und damit die äußere Anschluss-Durchströmungsöffnung 24 überbrückt und dichtend schließt. Der Ventilaufnahmeraum 230 ist über einen Entlüftungskanal 29 mit der Außenumgebung verbunden.

Die Dichtung ist durch zwei gleiche radiale Umfangsdichtungen 112, 113 ausgebildet, die in eine umlaufende Nut an der Steckfassung 221 bzw. in eine umlaufende Nut an der Steckfassung 231 eingelassen sind.

Ein kupplungsseitiger innerer Steckrand 202 des Mutterteil-Außengehäuses 22 definiert eine Stirnfläche 220 des Kupplungsteils 2. Ein an dem Mutterteil-Schließkörper 41 ausgebildeter Steckrand 201 ragt bei nicht-verbundener Kupplung 1 (Fig. 1) geringfügig an einer durch die Stirnfläche bestimmten Radialebene 220 hervor.

Zwischen der Außenhülse 412 und der Innenhülse 413 ist mit radialen Vorsprüngen eine Verzahnung 415 hergestellt, die die beiden Hülsen 412, 413 unter Druck- bzw. Schiebekraft in beiden Axialrichtungen einander mitnehmend aneinanderhält. Die Innenhülse 413 weist leitungsseitig einen Radialrand 416 auf, der im Schließzustand des Ventilmittels 4 mittels der vorgespannten Schraubenfeder 421 gegen einen radialen kupplungsseitigen Rand des Zylinderkerns 414 anschlägt, so dass der axiale Ventil-Schließhub des Schließkörpers 41 definiert begrenzt ist.

Eine Stirnseite des Kupplungsteils 3 bildet eine Leitungsseite, die durch ein Leitungsanschlussstück 36 mit Leitungsverbindungsöffnung 361 bestimmt ist. Die andere Stirnseite des Kupplungsteils 3 bildet die Kupplungsseite zur Verbindung mit dem anderen Kupplungsteil 2.

Das Vaterteil-Kupplungsteil 3 ist aus einem das Vaterteil 31 bildenden Innengehäuse 33 und einem Außengehäuse 32 zusammengefügt. Die beiden Gehäuse 32, 33 sind durch kreiszylindrische Hülsen gebildet, die mit der Kupplungsmittenachse 10 konzentrisch angeordnet sind. Das Innengehäuse 33 weist leitungsseitig einen Anschlussflansch in fester Schraubverbindung 305 mit einem Hülsenrand des Außengehäuses 32 auf.

Das Vaterteil-Innengehäuse 33 ist durch einen sich axial erstreckenden Hohlzylinder 333 gebildet. Dieser bildet einen axialen zentralen Anschlusskanal 35 für Medium aus, der sich mit einem leitungsseitig radial aufgeweiteten Abschnitt 362 zwischen einer kupplungsseitigen Zwischenwand 335 am Vaterteil-Steckende und der Verbindungsöffnung 361 erstreckt. Die Zwischenwand 335 bildet eine den Anschlusskanal 35 kupplungsseitig abschließende radiale Bodenwand mit zur Kupplungsmittenachse 10 senkrechter planer Bodenfläche. Dort weist das Kanalende die radial gerichteten inneren Anschluss-Durchströmungsöffnungen 34 in der seitlichen (axialen) Hohlzylinderwand 336 auf. Die Öffnungen 34 sind in ausreichender Zahl und Anpassung an die Strömungskapazität der Kanäle 28, 35 gleichmäßig über den Umfang des Innengehäuses 33 verteilt und weisen zweckmäßig jeweils gleichen, kreisformähnlichen Durchgangsquerschnitt auf. Sie münden unmittelbar in den zentralen Vaterteil-Anschlusskanal 35, wobei sie unmittelbar an die Zwischenwand 335 angrenzen.

Zwischen axialer längsseitiger Außenwand des Innengehäuses 33 und längsseitiger axialer Innenwand des Außengehäuses 32 ist ein Ventilaufnahmeraum 330 mit kreisringförmigem Querschnitt für das Vaterteil-Ventilmittel 5 ausgebildet. Dieses weist einen Hülsen-Schließkörper 51 und ein diesen beaufschlagendes Antriebsmittel 52 in Form einer Druck-Schraubenfeder 521 auf.

Der Schließkörper 51 sitzt im gedichteten axialen Schiebe-Gleitsitz auf dem Innengehäuse 33. Der Schließkörper 51 und die Schraubenfeder 521 werden im Zustand der Kupplungsverbindung, wie in Fig. 2 dargestellt, vollständig von dem Ventilaufnahmeraum 330 aufgenommen und gegen Medium gedichtet eingekapselt. Die Schraubenfeder 521 stützt sich leitungsseitig gegen einen eingezogenen radialen Außenrand des Innengehäuses 33 und kupplungsseitig gegen einen radialen Rand des Schließkörpers 51 ab. Der Ventilaufnahmeraum 330 ist über einen Entlüftungskanal 39 mit der Außenumgebung verbunden.

Im Zustand der nicht verbundenen Kupplung 1, wie in Fig. 1 dargestellt, schließt der Schließkörper 51 im Dichtsitz die inneren Anschluss-Durchströmungsöffnungen 34. Die Ventildichtung weist zwei radial wirkende Umfangsdichtungen 511 auf, die zum Schließen der Durchströmungsöffnungen 34 in Axialrichtung beidseitig derselben zu liegen kommen. Sie sind in umlaufende Ringnuten an der inneren Umfangswand des Hülsen-Schließkörpers 51 eingefasst.

Wie aus Fig. 1 ersichtlich, wird der Schließkörper 51 in der Ventil-Schließposition mittels der vorgespannten Druck-Schraubenfeder 521 gehalten. In dieser Schließposition sitzt der Schließkörper 51 mit einem Radialrand 512 gegen einen Radialrand 321 des Außengehäuses 32 an, so dass der axiale Ventil-Schließhub des Schließkörpers 51 definiert begrenzt ist.

Eine kupplungsseitige Stirnfläche des Kupplungsteils 3 wird durch die Stirnfläche eines Anschluss-Randflansches 323 definiert. Die Bauteile des Kupplungsteils 3 sind so ausgebildet und dimensioniert, dass eine kupplungsseitige Stirnfläche des Steckrands 301 des Vaterteils 31 zumindest im Wesentlichen in einer durch die Randflansch-Stirnfläche bestimmten Radialebene 320 zu liegen kommt. Ein an dem Hülsen-Schließkörper 51 ausgebildeter Steckrand 302 steht dann nur geringfügig an der Trenn-Radialebene 320 hervor.

Die kupplungsseitigen Ränder der Kupplungsteile 2, 3 sind jeweils mit axialem Versatz wechselseitig mit entsprechenden buchsenartigen Aufnahmen gestuft angeordnet und ausgebildet.

Wie am besten aus Fig.1 ersichtlich, ist der Steckrand 201 zum gedichteten Eingriff in eine durch den Steckrand 301 gebildete Buchse vorgesehen. Der Steckrand 301 und das anschließende Steckende des Vaterteils 31 werden von den buchsenartigen Steckfassungen 221, 231 mit innerem Steckrand 202 bzw. 203 aufgenommen. Der Steckrand 202 der kupplungsseitigen Steckfassung 221 fasst dichtend in einen buchsenartigen Ringraum, gebildet durch den Steckrand 302 des Schließkörpers 51, ein.

Das Außengehäuse 32 des Kupplungsteils 3 ist mit einem radial zurückspringenden äußeren Steckrand 304 ausgebildet, der kupplungsseitig mit dem Randflansch 323 abschließt. Der Rand 304 bildet zwischen dem Vaterteil 31 und dem Außengehäuse 32 eine ringförmige Steckbuchse 324 aus, die einen kupplungsseitigen äußeren Steckrand 204 des Mutterteilaußengehäuses 22 aufnimmt.

Der Rand 204 ist leitungsseitig durch einen Randflansch 223 begrenzt. Der Randflansch 223 und der Randflansch 323 werden zum Verbinden der Kupplungsteile 2, 3 aneinandergeschlossen. Sie bilden eine Trennverriegelungsstelle 12. Die axiale Länge der Buchse 324 entspricht im Ausführungsbeispiel der Axiallänge des Schließkörpers 51, und zwar in einem Maß, das der Schließkörper 51 im Verbindungszustand der Kupplung 1 in dem Raum des Ventilaufnahmeraum 330 zu liegen kommt, in dem sich die vorgespannte Schraubenfeder 521 im nicht-verbundenen Kupplungszustand (Fig. 1) erstreckt.

Die anhand des vorstehenden Ausführungsbeispiels beschriebene erfindungsgemäße Schnelltrennkupplung 1 ist, wie dies aus Fig. 2 hervorgeht, mit einer druckneutralen Trennübergangsstelle 11 ausgestattet, die Bestandteil eines eine Sicherung bildenden Schnelltrennmittels ist. Die Trennübergangsstelle 11 ist durch den Bereich der äußeren Anschluss-Durchströmungsöffnung 24, der inneren Anschluss-Durchströmungsöffnungen 34 und dem radialen Übergangs-Ringkanal 111 bestimmt. Die inneren Anschluss-Durchströmungsöffnungen 34 sind radial mit dem radialen Übergangs-Ringkanal 111 ausgerichtet und münden in ihn an der äußeren Anschluss-Durchströmungsöffnung 24. Man erreicht mit diesen Maßnahmen und den gleich ausgebildeten radialen Umfangsdichtungen 112, 113, dass bei Mediumdurchfluss an der Trennübergangsstelle 11 axial wirkende Aktions- und Reaktionskräfte druckneutralisierend ausgeglichen sind. Erfindungsgemäß wird sichergestellt, dass die genannte Druckneutralisierung ausschließlich zwischen Teilen der Kupplungsteile 2, 3 ausgebildet und hergestellt ist, die im Medium-Strömungsweg vollständig frei von axial beweglichen Teilen der Ventilmittel 4, 5 sind. Sowohl die Ventilantriebsmittel 42, 52, als auch die Ventil-Schließkörper 41, 51 sind gänzlich aus dem Strömungsweg herausgenommen und von diesem gedichtet abgetrennt.

Die beiden Randflansche 223, 323 sind Bestandteile einer Verriegelungseinrichtung 6. Die Verriegelung ist durch Bruchbolzen 81 hergestellt, die eine radiale Trennebene 120 der Trennverriegelungsstelle 12 durchfassen und jeweils mit einem Paar Schrauben 82 in Axialbohrungen der Flansche 223, 323 vorgespannt und fixiert sind. Sie sind, wie aus Fig. 3 ersichtlich, am Flanschumfang gleichmäßig verteilt angeordnet.

Die Bruchbolzen 81 bilden mit den Schrauben 82 eine Auslöseeinrichtung 8. Diese arbeitet als Nottrenneinrichtung 7. Die Bruchbolzen 81 sind so ausgelegt und mit den Schrauben 82 eingespannt, dass bei einer vorgegebenen Zuglast zwischen den Kupplungsteilen 2, 3 an der Trennverriegelungsstelle 12 durch Bruch der Bolzen 81 ein Abriss der beiden Kupplungsteile 2, 3 voneinander erfolgt. Der Bruchbolzen-Abriss ist aus Fig. 1 ersichtlich. Beim Abriss schließen die Ventilmittel 4, 5 schlagartig, wobei auch die beiden Kupplungsteile 2, 3 in Axialrichtung auseinandergetrieben werden. In der Phase des Trennens wird auch die in Fig. 1 dargestellte Position der beiden Kupplungsteile durchlaufen. Diese in Fig. 1 dargestellte Position ist weiter oben als Position unmittelbar vor dem Zusammenstecken der Kupplungsteile 2, 3 beschrieben worden. Selbstverständlich wird die Bruchbolzenverbindung beim Zusammenstecken (erneut) hergestellt.

Man erkennt, dass die Abreißkraft des Schnelltrennmittels, gebildet durch die druckneutrale Trennübergangsstelle 11 und die Nottrenneinrichtung 7 der Schnelltrennkupplung 1, ausgestattet mit den selbsttätigen Ventilmitteln 4, 5 vom Einfluss eines inneren Medium-Betriebsdrucks vollkommen befreit ist. Damit ist erreicht, dass die Abreißkraft, also die die selbsttätige Entriegelung der Kupplungsverbindung bewirkende definierte Auslösekraft an der Trennverriegelungsstelle 12 ausschließlich durch die Auslöseeinrichtung, das heißt durch deren Auslösemittel, bestimmt und vorgegeben wird.

## Patentansprüche

1. Schnelltrennkupplung (1) zum dichtenden Verbinden von flüssige oder gasförmige Medien transportierenden Leitungen, umfassend
a) zwei in der Leitungsverbindung unter Mediumdruck trennbare, einen Medium-Strömungsweg in der Kupplung (1) herstellende, sich jeweils zwischen Kupplungsseite und Leitungsseite in gerader Kupplungsmittenachse (10) erstreckende Kupplungsteile (2, 3) mit Mutterteil (21) und Vaterteil (31), die kupplungsseitig eine einen gedichteten Mediumdurchgang im Medium-Strömungsweg herstellende Anschluss-Steckverbindung ausbilden, wobei das ein Steckende aufweisende Vaterteil (31) einen steckseitig in Axialrichtung zur Kupplungsseite geschlossenen, seitlich durch innere Anschluss-Durchströmungsöffnungen (34) offenen, Medium führenden axialen Anschlusskanal (35) und das Mutterteil (21) zur Steckaufnahme des Vaterteils (31) eine kupplungsseitige, vordere gedichtete Steckfassung (221) und eine axial versetzte hintere gedichtete Steckfassung (231) aufweisen, wobei zwischen den Steckeinfassungen (221,231) wenigstens eine äußere Anschluss-Durchströmungsöffnung (24) ausgebildet ist;
b) eine die beiden Kupplungsteile (2, 3) in lösbarer Steckverbindung haltende Verrieglungseinrichtung (6);
c) ein eine Sicherung bildendes Schnelltrennmittel, umfassend
c1) eine im Zustand der Anschluss-Steckverbindung zwischen dem Mutterteil (21) und dem Vaterteil (31) ausgebildete, den Mediumdurchgang herstellende druckneutrale Trennübergangsstelle (11), die derart ausgebildet ist, dass bei Mediumdurchfluss an der Trennübergangsstelle (11) axial wirkende Aktions- und Reaktionskräfte druckneutralisierend ausgeglichen sind;
c2) eine Nottrenneinrichtung (7), umfassend die Verriegelungseinrichtung (6) und eine damit zusammenwirkende, in einstellbarem Maß mittels Weg- oder Zugsteuerung betreibbare Auslöseeinrichtung (8) zum definierten Trennen der beiden Kupplungsteile (2, 3) an einer Trennverriegelungsstelle (12), die infolge der Wirkung der druckneutralen Trenn-Mediumübergangsstelle (11) von aus Mediumdurchfluss resultierenden Axialkräften frei ist,
**dadurch gekennzeichnet, dass**
i) das eine Kupplungsteil (2) ein Mutterteil-Ventilmittel (4) und das andere Kupplungsteil (3) ein Vaterteil-Ventilmittel (5) umfassen, die derart eingerichtet sind, dass sie einerseits die wenigstens eine äußere Anschluss-Durchströmungsöffnung (24) und andererseits die inneren Anschluss-Durchströmungsöffnungen (34) im Kupplungs-Verbindungszustand öffnen bzw. im Kupplungs-Trennzustand schließen,
ii) die Ventilmittel (4, 5) weiter derart eingerichtet sind, dass jedes Ventilmittel (4, 5) einen Schließkörper (41, 51) und ein ihn in Axialrichtung zur Kupplungsseite hin treibendes Antriebsmittel (42, 52) derart aufweist, dass jeder Schließkörper (41, 51) im Kupplungs-Verbindungszustand mittels der verriegelten Anschluss-Steckverbindung in gegen das zugehörige Antriebsmittel (42, 52) verdrängter Ventil-Öffnungsposition gehalten und beim Trennen der Kupplungsteile (2, 3) mittels der Nottrenneinrichtung (7) in die Ventil-Schließposition getrieben wird,
iii) die getriebenen Ventil-Schließkörper (41,51) Bestandteile der Nottrenneinrichtung (7) derart bilden, dass die Kupplungsteile (2, 3) beim Trennen in Axialrichtung selbsttätig auseinander treiben, und
iv) sämtliche die Durchströmungsöffnungen (24, 34) öffnenden und schließenden Schließkörper (41,51) sowie deren Antriebsmittel (42, 52) im Verbindungszustand der Kupplung (1) gänzlich außerhalb des Medium-Strömungswegs in Abdichtung gegenüber diesem vollständig frei von Durchflussmedium angeordnet sind.

2. Schnelltrennkupplung nach Anspruch 1, **dadurch gekennzeichnet, dass** jedes Kupplungsteil (2, 3) mit nur einem Ventilmittel-Schließkörper (41, 51) ausgestattet ist, wobei radiale Stirnflächen der als Verschlusshülsen ausgebildeten Schließkörper (41, 51) in jeder Position frei von axial wirkendem Mediumdruck gehalten sind, wobei die beiden Schließkörper (41,51) konzentrisch mit der Kupplungsmittenachse (10) angeordnet und jeweils mit nur einem Antriebsmittel (42, 52) beaufschlagt sind, das zweckmäßig durch eine mit der Kupplungsmittenachse (10) konzentrische Druckfeder gebildet ist.

3. Schnelltrennkupplung nach Anspruch 1 oder 2, **dadurch gekennzeichnet, dass** das Mutterteil-Kupplungsteil (2) ein Innengehäuse (23) mit einem kupplungsseitig offenen Hohlzylinder (232) aufweist, der einen Ventilaufnahmeraum (230) für das Mutterteil-Ventilmittel (4) bildet, wobei das Mutterteil-Ventilmittel (4) in der im Kupplungsverbindungszustand eingerichteten Ventil-Öffnungsposition vollständig in dem Mutterteil-Ventilaufnahmeraum (230) frei von Mediumberührung **dadurch** eingekapselt ist, dass das Steckende des Vaterteils (31) in die hintere Mutterteil-Steckfassung (231) im Dichtungsstecksitz einfasst.

4. Schnelltrennkupplung nach einem der Ansprüche 1 bis 3, **dadurch gekennzeichnet, dass** das Vaterteil-Kupplungsteil (3) ein das Vaterteil (31) bildendes Innengehäuse (33) und ein Außengehäuse (32) aufweist, zwischen denen ein ringförmiger Ventilaufnahmeraum (330) für das Vaterteil-Ventilmittel (5) ausgebildet ist, wobei das Vaterteil-Ventilmittel (5) in der im Kupplungsverbindungszustand eingerichteten Ventil-Öffnungsposition vollständig in dem Vaterteil-Ventilaufnahmeraum (330) frei von Mediumberührung **dadurch** eingekapselt ist, dass das Mutterteil-Kupplungsteil (2) mit einem kupplungsseitigen Gehäusesteckrand (202) ausgebildet ist, das den Vaterteil-Ventilaufnahmeraum (330) kupplungsseitig im Dichtsitz schließt.

5. Schnelltrennkupplung nach einem der Ansprüche 1 bis 4, **dadurch gekennzeichnet, dass** die Schließkörper (41, 51) der beiden Ventilmittel (4, 5) derart eingerichtet und angeordnet sind, dass sie unter der Wirkung der Ventilantriebsmittel (42, 52) in Axialrichtung jeweils gegen einen kupplungsseitigen gehäusefesten Rand (202, 301) des einen bzw. des anderen Kupplungsteils (2, 3) arbeiten und im Kupplungsverbindungszustand jeweils mittels des gehäusefesten Randes (202, 301) in einem zugehörigen, gegenüber Medium im Strömungsweg dicht geschlossenen Ventilaufnahmeraum (230, 330) gehalten sind.

6. Schnelltrennkupplung nach einem der Ansprüche 1 bis 5, **dadurch gekennzeichnet, dass** zwischen den Kupplungsteilen (2, 3) eine stufenartige Steckverbindung derart ausgebildet ist, dass kupplungsseitig innere gehäusefeste Steckränder (202, 203, 301, 303) und äußere gehäusefeste Steckränder (204, 304) sowie an den beiden Schließkörper (41, 51) ausgebildete kupplungsseitige Stufen-Steckränder (201, 302) mit zugeordneten gehäusefesten Steckrändern des jeweils anderen Kupplungsteils (2, 3) beim Zusammenstecken der Kupplungsteile (2, 3) und im Verbindungszustand der Kupplung (1) mit der Kupplungsmittenachse (10) konzentrische Steckverbindungen bilden.

7. Schnelltrennkupplung nach einem der Ansprüche 1 bis 6, **dadurch geken nzeichnet,** dass die Trennübergangsstelle (11) durch einen druckneutralen Raum bestimmt ist, der in radialer Ausrichtung einen die wenigstens eine Anschluss-Durchströmungsöffnung (24) über seinen Ringumfang aufweisenden Übergangs-Ringkanal (111) aufweist, der zwischen gleichen, das Mutterteil (21) und das Vaterteil (31) im Bereich der Mutterteil-Steckfassungen (221, 231) gegeneinander abdichtenden radialen Umfangsdichtungen (112, 113) ausgebildet ist, sowie bestimmt durch die inneren Anschluss-Durchströmungsöffnungen (34), die radial mit dem radialen Übergangs-Ringkanal (111) ausgerichtet sind und in ihn an der wenigstens einen äußeren Anschluss-Durchströmungsöffnung (24) münden, wobei der Übergangs-Ringkanal (111) mit der wenigstens einen äußeren Anschluss-Durchströmungsöffnung (24) und den inneren Anschluss-Durchströmungsöffnungen (34) zum druckneutralisierenden Ausgleich der Aktions- und Reaktionskräfte eingerichtet ist.

8. Schnelltrennkupplung nach Anspruch 7, **dadurch gekennzeichnet, dass** das Mutterteil (21) ein Außengehäuse (22) und ein Innengehäuse (23) aufweist, die konzentrisch angeordnet sind und als Bestandteil des Medium-Strömungswegs einen sich axial erstreckenden umlaufenden Ringkanal (25) ausbilden, der kupplungsseitig in den radialen Übergangs-Ringkanal (111) mündet, und dass das Mutterteil (21) leitungsseitig ein Leitungsanschlussstück (26) und als Bestandteil des Medium-Strömungswegs einen an dem Leitungsanschlussstück (26) endenden zentralen Mediumkanal (28) aufweist, der zum Durchgang von Medium im Medium-Strömungsweg mit wenigstens einer Radialöffnung (27) ausgebildet ist, in die der axiale Medium-Ringkanal (25) leitungsseitig mündet.

9. Schnelltrennkupplung nach Anspruch 8, **dadurch gekennzeichnet, dass** der zentrale Mediumkanal (28) des Mutterteil-Kupplungsteils (2) zwischen dem axialen Mutterteil-Ringkanal (25) und einer Verbindungsöffnung (261) des Leitungsanschlussstückes (26) geradlinig, in Radialrichtung frei von gegensinniger Strömungsführung ausgebildet ist.

10. Schnelltrennkupplung nach Anspruch 9, **dadurch gekennzeichnet, dass** der zentrale Mutterteil-Mediumkanal (28) durch einen sich axial erstreckenden Hohlzylinder (233) mit kupplungsseitig geschlossener Zylinderbodenwand und mit in seitlicher Hohlzylinderwand (236) den Radialöffnungen (27) gebildet ist, in die der axiale Medium-Ringkanal (25) mündet und die am kupplungsseitigen Ende des Hohlzylinders (233) in radialer, zur Kupplungsmittenachse (10) senkrechter Ausrichtung in gleichmäßiger Anordnung ausgebildet sind.

11. Schnelltrennkupplung nach einem der Ansprüche 1 bis 10, **dadurch gekennzeichnet, dass** das Vaterteil-Kupplungsteil (3) ein das Vaterteil (31) bildendes Innengehäuse (33) in Form eines sich axial erstreckenden Hohlzylinders (333) aufweist, wobei der axiale Vaterteil-Anschlusskanal (35) mit kupplungsseitig geschlossener Vaterteil-Zylinderbodenwand und mit in seitlicher Hohlzylinderwand (336) den inneren Anschluss-Durchströmungsöffnungen (34) ausgebildet ist, und wobei die Anschluss-Durchströmungsöffnungen (34) am kupplungsseitigen Ende des Hohlzylinders (333) in radialer, zur Kupplungsachse (10) senkrechter Ausrichtung in gleichmäßiger Anordnung ausgebildet sind.

12. Schnelltrennkupplung nach Anspruch 11, **dadurch gekennzeichnet, dass** der Vaterteil-Anschlusskanal (35) zwischen einer Verbindungsöffnung (361) des Leitungsanschlussstücks (36) und der Vaterteil-Zylinderbodenwand (335) geradlinig, in Radialrichtung frei von gegensinniger Strömungsführung ausgebildet ist.

13. Schnelltrennkupplung nach einem der Ansprüche 1 bis 12, **dadurch gekennzeichnet, dass** die Nottrenneinrichtung (7) eine die Verriegelungseinrichtung (6) und die Auslöseeinrichtung (8) bildende Bruchbolzensicherung umfasst.

## Claims

1. Quick-disconnect coupling (1) for sealed connection of lines which transport liquid or gaseous media, comprising
a) two coupling parts (2, 3) which are separable in the line connection under medium pressure, establish a medium flow path in the coupling (1), each extend between the coupling side and the line side in a straight coupling central axis (10), and have a female part (21) and a male part (31) which form on the coupling side a connecting plug-in connection which provides a sealed passage for the medium in the medium flow path, the male part (31), which comprises a plug end, comprising an axial connecting channel (35) which is closed on the plug side in the axial direction towards the coupling side, is open laterally via internal connecting flow openings (34), and carries medium, and the female part (21), for receiving the plug of the male part (31), comprising a sealed front plug socket (221) on the coupling side and an axially offset sealed rear plug socket (231), at least one outer connecting flow opening (24) being formed between the plug sockets (221, 231);
b) a locking means (6) which holds the two coupling parts (2, 3) in a releasable plug-in connection;
c) a quick-release means which forms a safety device, comprising
c1) a pressure-neutral separation transition junction (11), which is formed when there is a connecting plug-in connection between the female part (21) and the male part (31), establishing the passage for the medium, and is formed in such a way that when medium flows through at the separation transition junction (11), axial action and reaction forces are compensated to neutralise the pressure;
c2) an emergency separation means (7), comprising the locking means (6) and a release means (8), which cooperates therewith and can be operated to an adjustable degree by displacement or traction control, for defined separation of the two coupling parts (2, 3) at a separation locking point (12) which, as a result of the effect of the pressure-neutral separation medium transition junction (11), is free from axial forces resulting from medium flow,
**characterised in that**
i) one coupling part (2) comprises a female part valve means (4) and the other coupling part (3) comprises a male part valve means (5), said valve means being designed in such a way as to open, when the coupling is connected, and to close, when the coupling is separated, the at least one outer connecting flow opening (24) on the one hand and the inner connecting flow openings (34) on the other hand,
ii) the valve means (4, 5) are further designed in such a way that each valve means (4, 5) comprises a closing body (41, 51) and a drive means (42, 52) which drives said closing body in the axial direction towards the coupling side, in such a way that each closing body (41, 51) is held in the valve open position, pressed against the associated drive means (42, 52) by the locked connecting plug-in connection when the coupling is connected, and is driven into the valve closed position by the emergency separation means (7) when the coupling parts (2, 3) are separated,
iii) the driven valve closing bodies (41, 51) form components of the emergency separation means (7), in such a way that the coupling parts (2, 3) are automatically driven apart in the axial direction when separated, and
iv) all of the closing bodies (41,51), which open and close the flow openings (24, 34), and the drive means (42, 52) of said bodies are arranged completely outside the medium flow path, sealed off therefrom and completely free from flow medium, when the coupling (1) is connected.

2. Quick-disconnect coupling according to claim 1, **characterised in that** each coupling part (2, 3) is equipped with only one valve means closing body (41, 51), radial end faces of the closing bodies (41, 51), which are formed as closing sleeves, being kept free from axial medium pressure in every position, the two closing bodies (41, 51) being arranged concentrically with the coupling central axis (10) and each being acted on by only one drive means (42, 52), which is expediently formed by a compression spring which is concentric with the coupling central axis (10).

3. Quick-disconnect coupling according to claim 1 or 2, **characterised in that** the female part coupling part (2) comprises an inner housing (23) having a hollow cylinder (232) which is open on the coupling side and which forms a valve accommodation chamber (230) for the female part valve means (4), the female part valve means (4) being encapsulated completely in the female part valve accommodation chamber (230), free from medium contact, in the valve opening position established when the coupling is connected, in such a way that the plug end of the male part (31) plugs into the rear female part plug socket (231) in a sealed, plug-in manner.

4. Quick-disconnect coupling according to any one of claims 1 to 3, **characterised in that** the male part coupling part (3) comprises an inner housing (33), which forms the male part (31), and an outer housing (32), an annular valve accommodation chamber (330) for the male part valve means (5) being formed between said housings, the male part valve means (5) being encapsulated completely in the male part valve accommodation chamber (330), free from medium contact, in the valve opening position established when the coupling is connected, in such a way that the female part coupling part (2) is formed on the coupling side with a plug-in skirt (202) which closes the male part valve accommodation chamber (330) in a sealed seat on the coupling side.

5. Quick-disconnect coupling according to any one of claims 1 to 4, **characterised in that** the closing bodies (41, 51) of the two valve means (4, 5) are designed and arranged in such a way that they each work in the axial direction against a coupling-side skirt (202, 301), fixed to respective housing, of one or the other of the coupling parts (2, 3) under the action of the valve drive means (42, 52), and are each held, by said skirt (202, 301), in an associated valve accommodation chamber (230, 330) which is sealed tightly against medium in the flow path when the coupling is connected.

6. Quick-disconnect coupling according to any one of claims 1 to 5, **characterised in that** a step-type plug-in connection is formed between the coupling parts (2, 3) in such a way that coupling-side inner plug skirts (202, 203, 301, 303) and outer plug skirts (204, 304) as well as coupling-side stepped plug skirts (201, 302) formed on the two closing bodies (41, 51) form plug-in connections, concentric with the coupling central axis (10), with associated plug skirts, being fixed to respective housings, of the respective other coupling part (2,3) when the coupling parts (2, 3) are plugged together and the coupling (1) is connected.

7. Quick-disconnect coupling according to any one of claims 1 to 6, **characterised in that** the separation transition joint (11) is defined by a pressure-neutral chamber which in radial alignment comprises an annular transition channel (111), which comprises the at least one connecting flow opening (24) over the annular circumference thereof and which is formed between identical radial circumferential seals (112, 113) which seal the female part (21) and the male part (31) off from one another in the region of the female part plug sockets (221, 231), and defined by the inner connecting flow openings (34), which are radially aligned with the radial annular transition channel (111) and open into said channel at the at least one outer connecting flow opening (24), the annular transition channel (111) being designed along with the at least one outer connecting flow opening (24) and the inner connecting flow openings (34) for pressure-neutralising compensation of the action and reaction forces.

8. Quick-disconnect coupling according to claim 7, **characterised in that** the female part (21) comprises an outer housing (22) and an inner housing (23), which are arranged concentrically and form, as a component of the medium flow path, an axially extending annular circumferential channel (25), which opens on the coupling side into the radial annular transition channel (111), and **in that** the female part (21) comprises on the line side a line connector piece (26) and, as a component of the medium flow path, a central medium channel (28), which ends at the line connector piece (26) and for the passage of medium in the medium flow path is formed with at least one radial opening (27) into which the axial annular medium channel (25) opens on the line side.

9. Quick-disconnect coupling according to claim 8, **characterised in that** the central medium channel (28) of the female part coupling part (2) is formed free from counter currents in the radial direction, in a straight line between the axial annular female part channel (25) and a connecting opening (261) of the line connector piece (26).

10. Quick-disconnect coupling according to claim 9, **characterised in that** the central female part medium channel (28) is formed by an axially extending hollow cylinder (233) having a cylinder base wall which is closed on the coupling side and having, in the lateral hollow cylinder wall (236), the radial openings (27) into which the axial annular medium channel (25) opens and which are formed on the coupling-side end of the hollow cylinder (233) in a uniform arrangement in a radial orientation perpendicular to the coupling central axis (10).

11. Quick-disconnect coupling according to any one of claims 1 to 10, **characterised in that** the male part coupling part (3) comprises an inner housing (33) which forms the male part (31) and which is in the form of an axially extending hollow cylinder (333), the axial male part connecting channel (35) being formed with a male part cylinder base wall which is closed on the coupling side and having, in the lateral hollow cylinder wall (336), the inner connecting flow openings (34), and the connecting flow openings (34) being formed on the coupling-side end of the hollow cylinder (333) in a uniform arrangement in a radial orientation perpendicular to the coupling central axis (10).

12. Quick-disconnect coupling according to claim 11, **characterised in that** the male part connecting channel (35) is formed free from counter currents in the radial direction, in a straight line between a connecting opening (361) of the line connector piece (36) and the male part cylinder base wall (335).

13. Quick-disconnect coupling according to any one of claims 1 to 12, **characterised in that** the emergency separation means (7) comprises a breaking pin safety device which forms the locking means (6) and the release means (8).

## Revendications

1. Raccord (1) à séparation rapide pour la jonction étanche de conduites transportant des milieux liquides ou gazeux, comprenant
a. deux parties (2, 3) de raccord, séparables sous la pression du milieu dans la jonction des conduites, générant une voie de circulation dans le raccord (1), s'étendant respectivement entre le côté raccord et le côté conduite dans un axe (10) de raccord central, avec élément femelle (21) et élément mâle (31), qui forment côté raccord une jonction de raccordement mâle-femelle générant un passage étanché du milieu dans la voie de circulation du milieu, l'élément mâle (31), qui présente une extrémité enfichable, présentant un canal (35) de raccordement axial transportant le milieu, fermé du côté enfichable dans le sens axial par rapport au côté raccord, ouvert latéralement par des ouvertures (34) de raccordement circulatoire, et l'élément femelle (21) présentant, pour recevoir l'élément mâle (31), une douille enfichable (221) avant étanchée côté raccord et une douille enfichable (231) arrière étanchée en décalage par rapport à l'axe, au moins une ouverture (24) de raccordement circulatoire externe étant générée entre les douilles enfichables (221, 231) ;
b. un dispositif (6) de verrouillage maintenant les deux parties (2, 3) de raccord en jonction enfichée amovible ;
c. un moyen de séparation rapide constituant une sécurité, comprenant
c1) un point (11) de passage séparatif à pression neutre générant le passage du milieu, formé dans l'état jointif du raccordement mâle-femelle entre l'élément femelle (21) et l'élément mâle (31), qui est formé de telle sorte que des forces d'action et de réaction agissant au niveau axial en cas de passage de milieu au point (11) de passage séparatif soient équilibrées d'une manière neutralisant la pression ;
c2) un dispositif (7) de séparation d'urgence, comprenant le dispositif (6) de verrouillage et un dispositif (8) de déclenchement agissant de concert, actionnable en proportion réglable au moyen d'une commande de déplacement ou de traction pour une séparation définie des deux parties (2, 3) de raccord en un point (12) de verrouillage séparatif qui, en conséquence de l'action du point (11) de passage séparatif du milieu, est libéré des forces axiales résultant du passage du milieu,
**caractérisé en ce que**
i) une partie (2) de raccord comprend un moyen (4) de vannage à élément femelle et la deuxième partie (3) de raccord un moyen (5) de vannage à élément mâle, qui sont disposés de telle sorte que d'une part l'au moins une ouverture (24) de raccordement circulatoire et d'autre part les ouvertures (34) de raccordement circulatoires internes s'ouvrent dans l'état jointif du raccord ou se ferment dans l'état séparé du raccord,
ii) les moyens (4, 5) de vannage sont de plus disposés de telle sorte que chaque moyen de vannage (4, 5) présente un corps (41, 51) de fermeture et un moyen (42, 52) d'actionnement le poussant dans le sens axial vers le côté du raccord, de sorte que chaque corps (41, 51) de fermeture soit, dans l'état jointif du raccord, maintenu au moyen de la jonction mâle-femelle verrouillée en position d'ouverture de vanne déplacée contre le moyen (42, 52) d'actionnement correspondant, et amené au moyen du dispositif (7) de séparation d'urgence en position de fermeture de vanne lors de la séparation des parties (2, 3) de raccord,
iii) les corps (41,51) de fermeture de vanne font partie intégrante du dispositif (7) de séparation d'urgence de telle sorte que les parties (2, 3) de raccord s'éloignent automatiquement l'une de l'autre dans le sens axial lors de la séparation, et
iv) tous les corps (41, 51) de fermeture qui ouvrent et ferment les ouvertures circulatoires (24, 34) ainsi que leurs moyens (42, 52) d'actionnement sont disposés dans l'état jointif du raccord (1) de manière à être complètement en dehors de la voie de circulation du milieu, étanches par rapport à celle-ci et entièrement vides de milieu en circulation.

2. Raccord à séparation rapide selon la revendication 1, **caractérisé en ce que** chaque partie (2, 3) de raccord n'est équipé que d'un corps (41, 51) de fermeture de moyen de vannage, des faces radiales des corps (41, 51) de fermeture en forme de manchons obturateurs étant maintenus sans pression à effet axial du milieu dans chaque position, les deux corps de fermeture (41, 51) étant disposés de manière concentrique par rapport à l'axe (10) central du raccord et n'étant respectivement sollicités que par un seul moyen (42, 52) d'actionnement judicieusement formé par un ressort de compression concentrique par rapport à l'axe (10) central du raccord.

3. Raccord à séparation rapide selon la revendication 1 ou 2, **caractérisé en ce que** la partie (2) de raccord à élément femelle présente un logement interne (23) avec un cylindre creux (232) ouvert côté raccord, qui forme un espace (230) de logement de vanne pour le moyen (4) de vannage à élément femelle, le moyen (4) de vannage à élément femelle dans la position d'ouverture de vanne obtenue dans l'état jointif du raccord étant complètement encapsulé sans contact avec le milieu dans l'espace (230) de logement de vanne à élément femelle, de telle sorte que l'extrémité enfichable de l'élément mâle (31) s'insère dans la douille enfichable (231) arrière de l'élément femelle dans le siège enfichable du joint.

4. Raccord à séparation rapide selon l'une des revendications 1 à 3, **caractérisé en ce que** la partie (3) de raccord à élément mâle présente un logement interne (33) constituant l'élément mâle (31) et un logement externe (32), entre lesquels est formé un espace annulaire (330) de logement de vanne pour le moyen (5) de vannage à élément mâle, le moyen (5) de vannage à élément mâle dans la position d'ouverture de vanne obtenue dans l'état jointif du raccord étant complètement encapsulé sans contact avec le milieu dans l'espace (330) de vanne à élément mâle, de telle sorte que la partie (2) de raccord à élément femelle soit formée avec un bord (202) de logement enfichable côté raccord, qui ferme l'espace (330) de logement de vanne à élément mâle côté raccord dans le siège étanche.

5. Raccord à séparation rapide selon l'une des revendications 1 à 4, **caractérisé en ce que** les corps de fermeture (41, 51) des deux moyens (4, 5) de vannage sont disposés et installés de telle sorte qu'ils agissent respectivement, sous l'effet des moyens (42, 52) d'actionnement des vannes dans le sens axial, contre un bord (201, 301) fixé au logement de l'une ou de l'autre partie (2, 3) de raccord, et soient maintenus dans l'état jointif du raccord au moyen du bord (202, 301) fixé au logement dans un espace (230, 330) de logement de vanne approprié, hermétiquement fermé au milieu dans la voie de circulation.

6. Raccord à séparation rapide selon l'une des revendications 1 à 5, **caractérisé en ce qu'**un raccordement mâle-femelle de type à gradins est formé entre les parties (2, 3) de raccord, de telle sorte que des bords enfichables internes (202, 203, 301, 303) fixés au logement et des bords enfichables externes (204, 304) fixés au logement côté raccord, ainsi que des bords enfichables (201, 302) à gradins constitués côté raccord sur les deux corps (41, 51) de fermeture, forment avec des bords enfichables dédiés fixés au logement de l'autre partie (2, 3) de raccord respective, des raccordements mâles-femelles concentriques lors de l'assemblage des parties (2, 3) de raccord et dans l'état jointif du raccord (1) avec l'axe central (10) du raccord.

7. Raccord à séparation rapide selon l'une des revendications 1 à 6, **caractérisé en ce que** le point (11) de passage séparatif est défini par un espace à pression neutre présentant un canal (111) de passage circulaire comportant l'au moins une ouverture (24) de raccordement circulatoire sur sa circonférence, formé entre des joints périphériques radiaux (112, 113) semblables étanchant l'élément femelle (21) et l'élément mâle (31) l'un contre l'autre dans la zone des douilles enfichables (221, 231) de l'élément femelle, et défini par les ouvertures (34) de raccordement circulatoire internes qui sont alignées dans le sens radial avec le canal (111) de passage circulaire radial et qui débouchent dans celui-ci à l'au moins une ouverture (24) de raccordement circulatoire externe, le canal (111) de passage circulaire étant pourvu de l'au moins une ouverture (24) de raccordement circulatoire externe et des ouvertures (34) de raccordement circulatoire internes pour l'équilibrage à pression neutre des forces d'action et de réaction.

8. Raccord à séparation rapide selon la revendication 7, **caractérisé en ce que** l'élément femelle (21) présente un logement externe (22) et un logement interne (23) disposés de manière concentrique et formant en tant que partie intégrante de la voie de circulation du milieu un canal circulaire (25) périphérique s'étendant dans le sens axial qui débouche côté raccord dans le canal (111) de passage circulaire radial, et **en ce que** l'élément femelle (21) présente côté conduite un élément (26) de raccordement à la conduite et, en tant que partie intégrante de la voie de circulation du milieu, un canal (28) de milieu central aboutissant à l'élément (26) de raccordement à la conduite, formé avec au moins une ouverture radiale (27) pour le passage de milieu dans la voie de circulation du milieu, dans laquelle le canal circulaire (25) axial du milieu débouche côté conduite.

9. Raccord à séparation rapide selon la revendication 8, **caractérisé en ce que** le canal (28) de milieu central de la partie (2) de raccord à élément femelle est formé de manière rectiligne, sans écoulement à contre-courant dans le sens axial, entre le canal circulaire (25) axial de l'élément femelle et une ouverture (261) de jonction de l'élément (26) de raccordement à la conduite.

10. Raccord à séparation rapide selon la revendication 9, **caractérisé en ce que** le canal (28) de milieu central de l'élément femelle est formé par un cylindre creux (233) s'étendant dans le sens axial, avec paroi de fond de cylindre fermée côté raccord et avec les ouvertures radiales (27) dans la paroi latérale (236) du cylindre creux, dans lesquelles débouche le canal circulaire (25) du milieu et qui sont formées à l'extrémité côté raccord du cylindre creux (233), en ordre régulier dans le sens radial par rapport à l'axe central (10) du raccord.

11. Raccord à séparation rapide selon l'une des revendications 1 à 10, **caractérisé en ce que** la partie (3) de raccord à élément mâle présente un logement interne (33) constituant l'élément mâle (31) sous la forme d'un cylindre creux (333) s'étendant dans le sens axial, le canal (35) de raccordement axial de l'élément mâle étant constitué avec paroi de fond de cylindre de l'élément mâle fermée côté raccord et avec les ouvertures (34) de raccordement circulatoire internes en paroi latérale (336) de cylindre creux, et les ouvertures (34) de raccordement circulatoire étant formées en ordre régulier à l'extrémité côté raccord du cylindre creux (333) dans le sens radial, vertical par rapport à l'axe (10) du raccord.

12. Raccord à séparation rapide selon la revendication 11, **caractérisé en ce que** le canal (35) de raccordement de l'élément mâle est formé de manière rectiligne, sans écoulement à contre-courant dans le sens axial, entre une ouverture (361) de jonction de l'élément (36) de raccordement à la conduite et la paroi (335) de fond du cylindre de l'élément mâle.

13. Raccord à séparation rapide selon l'une des revendications 1 à 12, **caractérisé en ce que** le dispositif (7) de séparation d'urgence comprend une sécurité par boulon de rupture constituant le dispositif (6) de verrouillage et le dispositif (8) de déclenchement.
